# FASCICULE DE BREVET EUROPEEN

(11) **EP 1 711 696 B1**
(45) Date de publication et mention de la délivrance du brevet: **06.06.2007**
(21) Numéro de dépôt: 04816468.5
(22) Date de dépôt: 22.12.2004
(51) Int. Cl.: F01N 3/22, F01N 3/28, B01D 39/20

(54) **BLOC POUR LA FILTRATION DE PARTICULES CONTENUES DANS LES GAZ D'ECHAPPEMENT D UN MOTEUR A COMBUSTION INTERNE**
BLOCK ZUM FILTERN VON IN ABGASEN EINES VERBRENNUNGSMOTORS ENTHALTENEN TEILCHEN
BLOCK FOR FILTERING PARTICLES CONTAINED IN EXHAUST GASES OF AN INTERNAL COMBUSTION ENGINE

(30) Priorité: 24.12.2003 FR 0315389
(43) Date de publication de la demande: 18.10.2006
(73) Titulaire: Saint-Gobain Centre de Recherches et d'Etudes Européen, 92400 Courbevoie (FR)
(72) Inventeur: BARDON, Sébastien, 84306 Cavaillon Cedex (FR); BRIOT, Anthony, 84000 Avignon (FR); GLEIZE, Vincent, 84000 Avignon (FR)
(74) Mandataire: Sartorius, Jérome
(86) Numéro de dépôt international: PCT/FR2004/003340
(87) Numéro de publication internationale: WO 2005/064132

(56) Documents cités:
- EP-A- 1 142 619
- PATENT ABSTRACTS OF JAPAN vol. 2003, no. 08, 6 août 2003 (2003-08-06) & JP 2003 117322 A (NGK INSULATORS LTD), 22 avril 2003 (2003-04-22)
- PATENT ABSTRACTS OF JAPAN vol. 2003, no. 02, 5 février 2003 (2003-02-05) & JP 2002 292225 A (NGK INSULATORS LTD), 8 octobre 2002 (2002-10-08)

## Description

L'invention se rapporte à un bloc et à un corps formé par assemblage d'une pluralité de dits blocs, utilisés notamment pour la filtration de particules contenues dans les gaz d'échappement d'un moteur à combustion interne, en particulier du type diesel.

Classiquement, avant d'être évacués à l'air libre, les gaz d'échappement peuvent être purifiés au moyen d'un filtre à particules tel que celui représenté sur les figures 1 et 2, connu de la technique antérieure. Voir par example EP-A-1 142 619.

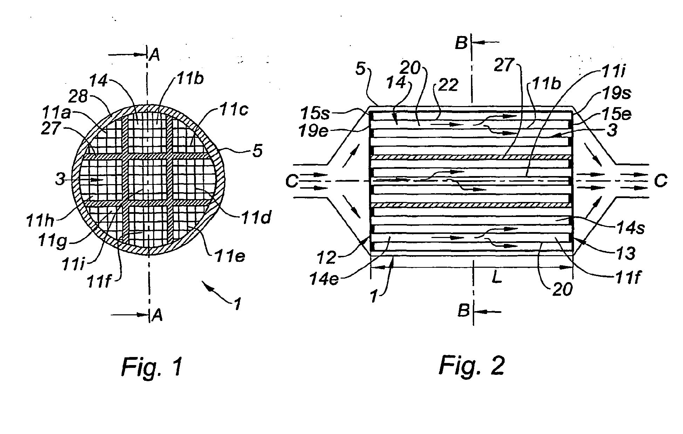

Un filtre à particules 1 est représenté sur la figure 1 en coupe transversale selon le plan de coupe B-B représenté sur la figure 2, et sur la figure 2 en coupe longitudinale selon le plan de coupe A-A représenté sur la figure 1.

Le filtre à particules 1 comporte classiquement au moins un corps filtrant 3, inséré dans une enveloppe métallique 5. Le corps filtrant 3 résulte de l'assemblage et de l'usinage d'une pluralité de blocs 11, référencés 11a-11i.

Pour fabriquer un bloc 11, on extrude une matière céramique (cordiérite, carbure de silicium,...) de manière à former une structure poreuse en nid d'abeille. La structure poreuse extrudée a classiquement la forme d'un parallélépipède rectangle, comportant quatre arêtes longitudinales 11', s'étendant selon un axe D-D entre deux faces amont 12 et aval 13 sensiblement carrées sur lesquelles débouchent une pluralité de canaux 14 adjacents, de section carrée, rectilignes, parallèles à l'axe D-D. Les canaux sont formés par l'interpénétration de deux ensembles de cloisons planes et parallèles, les cloisons du premier ensemble étant perpendiculaires aux cloisons du deuxième ensemble. Les quatre portions de cloison délimitant un canal 14 constituent une paroi latérale 22 de ce canal. Classiquement, toutes les cloisons des deux ensembles ont la même épaisseur, c'est-à-dire que la paroi latérale 22 d'un canal 14 quelconque est d'épaisseur constante.

Après extrusion, les structures poreuses extrudées sont alternativement bouchées sur la face amont 12 (canaux de sortie 14s) ou sur la face aval 13 (canaux d'entrée 14e), par des bouchons amont 15s et aval 15e, respectivement, comme cela est bien connu. A l'extrémité des canaux de sortie 14s et d'entrée 14e opposée aux bouchons amont 15s et aval 15e, respectivement, les canaux de sortie 14s et d'entrée 14e débouchent vers l'extérieur par des ouvertures de sortie 19s et d'entrée 19e, respectivement, s'étendant sur les faces aval 13 et amont 12, respectivement.

Chaque canal 14 définit ainsi un volume intérieur 20 délimité par la paroi latérale 22, un bouchon d'obturation 15s ou 15e, et une ouverture 19s ou 19e débouchant vers l'extérieur.

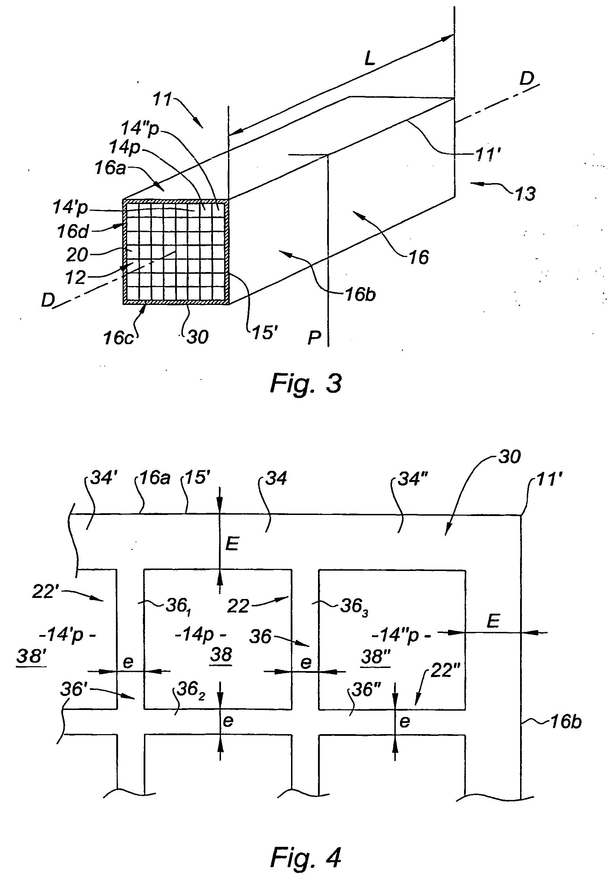

L'ensemble des faces extérieures 15' des canaux localisés à la périphérie d'un bloc 11, ou « canaux périphériques » 14p, forme une surface extérieure 16 du bloc 11 (voir figure 3). Du fait de la section transversale sensiblement carrée du bloc 11, la surface extérieure 16 comporte quatre faces 16a-16d, perpendiculaires deux à deux.

Les blocs 11a-11i sont assemblés entre eux par collage au moyen de joints 27 en ciment céramique généralement constitué de silice et/ou de carbure de silicium et/ou de nitrure d'aluminium. L'assemblage ainsi constitué peut être ensuite usiné pour prendre, par exemple, une section ronde. Ainsi les blocs extérieurs 11a, 11b, 11c, 11d, 11e, 11f, 11g, 11h présentent-ils une face externe arrondie par usinage.

Il en résulte un corps filtrant 3 cylindrique d'axe C-C, qui peut être inséré dans l'enveloppe 5, un joint périphérique 28, étanche aux gaz d'échappement, étant disposé entre les blocs filtrants extérieurs 11a-11h et l'enveloppe 5.

Comme l'indiquent les flèches représentées sur la figure 2, le flux F des gaz d'échappement entre dans le corps filtrant 3 par les ouvertures 19e des canaux d'entrée 14e, traverse les parois latérales filtrantes de ces canaux pour rejoindre les canaux de sortie 14s, puis s'échappe vers l'extérieur par les ouvertures 19s.

Après un certain temps d'utilisation, les particules, ou « suies », accumulées dans les canaux d'entrée 14e du corps filtrant 3 altèrent les performances du moteur. Pour cette raison, le corps filtrant 3 doit être régénéré régulièrement, par exemple tous les 500 kilomètres. La régénération, ou « décolmatage », consiste à oxyder les suies en les chauffant jusqu'à une température permettant leur inflammation.

Pendant les phases de régénération, les gaz d'échappement transportent vers l'aval toute l'énergie calorifique dégagée par la combustion des suies. De plus, les suies ne se déposant pas uniformément dans les différents canaux, les zones de combustion ne sont uniformément réparties dans le corps filtrant 3. Enfin, les zones périphériques du corps filtrant 3 sont refroidies, à travers l'enveloppe métallique 5, par l'air environnant

Il en résulte que la température diffère selon les zones du corps filtrant 3 et ne varie pas uniformément. L'inhomogénéité des températures au sein du corps filtrant 3 et les différences de nature des matériaux utilisés pour les blocs filtrants 11a-11i d'une part et pour les joints 27 d'autre part, génèrent des contraintes locales de fortes amplitudes pouvant conduire à des ruptures ou à des fissures locales. En particulier, les contraintes locales aux interfaces entre les blocs 11a-11h et l'enveloppe 5, et entre les blocs 11a-11i et les joints 27, peuvent conduire à des fissures au sein des blocs 11a-11i diminuant ainsi la durée de vie du filtre à particules 1.

Le but de l'invention est de fournir un nouveau bloc 11 apte à diminuer ce risque de fissures.

On atteint ce but au moyen d'un bloc destiné notamment à la filtration de particules contenues dans les gaz d'échappement d'un moteur à combustion interne, ledit bloc comportant une pluralité de canaux de circulation desdits gaz, chacun desdits canaux étant délimité par une paroi latérale, un bouchon d'obturation et une ouverture débouchant vers l'extérieur.

Le bloc filtrant selon l'invention est remarquable en ce qu'une première portion de la paroi latérale d'au moins un desdits canaux, dit « canal renforcé », comporte une surépaisseur par rapport au reste de ladite paroi latérale formant une deuxième portion de ladite paroi latérale, le rapport R de l'épaisseur « E » de ladite première portion sur l'épaisseur « e » de ladite deuxième portion, dans un plan de coupe transversal, étant compris entre 1,1 et 3.

Comme on le verra plus en détail dans la suite de la description, la présence d'une surépaisseur renforce localement le bloc, ce qui avantageusement limite les risques de fissures.

Le bloc filtrant selon l'invention comporte encore, de préférence, les autres caractéristiques suivantes :
- Le bloc filtrant comporte un groupe de dits canaux renforcés adjacents disposés de manière que lesdites premières portions desdits canaux renforcés forment une cloison de renfort continue. La surépaisseur formée par lesdits canaux renforcés est ainsi continue. La continuité de la surépaisseur confère une rigidité supplémentaire au bloc filtrant, ce qui avantageusement, permet de limiter plus encore l'apparition de fissures.
- Les canaux renforcés dudit groupe s'étendent en périphérie dudit bloc. La cloison de renfort peut ainsi ceinturer, au moins partiellement, les canaux intérieurs et les rigidifier. La fissuration des canaux intérieurs ainsi « protégés » en est avantageusement limitée.
- Ladite première portion comporte une face extérieure en contact avec l'extérieur dudit bloc.
- Lesdits canaux renforcés dudit groupe sont disposés de manière que ladite cloison de renfort recouvre une arête longitudinale dudit bloc filtrant Les arêtes longitudinales du bloc filtrant sont les zones d'apparition des contraintes thermomécaniques les plus fortes. Un recouvrement de ces zones par la cloison de renfort est donc avantageux.
- Ledit groupe de canaux renforcés comporte l'ensemble des canaux périphériques dudit bloc. La cloison de renfort ceinture ainsi le bloc filtrant. Une telle ceinture permet avantageusement de rigidifier l'ensemble des canaux du bloc de manière particulièrement efficace. De préférence, ladite cloison de renfort est à la surface extérieure dudit bloc.
- Ledit rapport R = E/e est constant quel que soit ledit plan de coupe transversal P considéré. L'effet de rigidification de la surépaisseur ou de la cloison de renfort est ainsi sensiblement constant sur toute la longueur L du bloc filtrant.
- Ladite surépaisseur est sensiblement constante dans un plan de coupe longitudinal quelconque dudit bloc. Avantageusement, la fabrication du bloc, et en particulier l'extrusion de la structure poreuse initiale, en est simplifiée.
- Ladite surépaisseur est sensiblement constante pour l'ensemble des canaux renforcés dudit groupe, dans un plan de coupe transversal quelconque et/ou dans un plan longitudinal quelconque. La cloison de renfort a ainsi une épaisseur sensiblement constante.
- Ledit rapport R est compris entre 1,9 et 2,1, de préférence est sensiblement égal à 2. De tels rapports R ont en effet avantageusement permis d'obtenir le niveau de fissuration le plus faible.

L'invention se rapporte également à un corps filtrant destiné à un filtre à particules, remarquable en ce qu'il comporte au moins bloc filtrant selon invention.

L'invention se rapporte aussi à une filière d'extrusion conformée de manière à former, par extrusion d'une matière céramique, une structure pourvue de canaux convenant à la fabrication d'un bloc filtrant selon l'invention, ladite structure comportant ladite surépaisseur. Selon l'invention, le bloc filtrant est de préférence « monobloc », c'est-à-dire que la surépaisseur n'est pas rapportée sur le bloc filtrant, mais est venue de matière avec lui. La rigidité du bloc filtrant et sa résistance à la fissuration en sont avantageusement améliorées. En outre, tout risque de décollement de matière formant la surépaisseur est ainsi avantageusement écarté. Enfin, la fabrication du bloc filtrant en est simplifiée.

L'invention se rapporte également à un procédé de fabrication d'un bloc filtrant comprenant les étapes successives suivantes :
a) extrusion d'une matière céramique de manière à former une structure poreuse en nid d'abeille,
b) application d'une surépaisseur d'une matière, identique ou différente de ladite matière céramique, sur au moins une partie de la surface extérieure de ladite structure poreuse, et
c) séchage et frittage de ladite structure poreuse pour obtenir un bloc filtrant.

Optionnellement, la structure poreuse peut être séchée entre les étapes a) et b), puis usinée, la surépaisseur de matière étant de préférence appliquée au moins sur une partie de ladite surface extérieure ayant été usinée.

Le bloc filtrant obtenu peut être assemblé à d'autres blocs filtrants, de préférence avec interposition de joints continus ou non, pour fabriquer un corps filtrant

La description qui va suivre, faite en se référant aux dessins annexés, permettra de mieux comprendre et apprécier les avantages de l'invention. Dans ces dessins :
- la figure 1 représente un filtre à particules selon la technique antérieure, en coupe transversale selon le plan de coupe transversal B-B représenté sur la figure 2 ;
- la figure 2 représente le même filtre à particules, selon le plan de coupe longitudinale A-A représenté sur la figure 1 ;
- la figure 3 représente en perspective un bloc selon l'invention, dans le mode de réalisation préféré ;
- la figure 4 représente, en coupe transversale selon le plan P représenté sur la figure 3, un détail du bloc représenté sur la figure 3 ;
- les figures 5 et 6 représentent, en vue de dessus, des coupes longitudinales, selon un plan médian M tel que représenté sur la figure 7, de corps filtrants constitués de 16 blocs selon l'invention et hors invention, respectivement, après avoir subi des tests de régénération sévère ;
- la figure 7 représente en coupe transversale, un corps filtrant mis en oeuvre pour lesdits tests.

Sur ces figures, non limitatives, les différents éléments ne sont pas nécessairement représentés à la même échelle. Des références identiques ont été utilisées sur les différentes figures pour désigner des éléments identiques ou similaires.

Selon l'invention, une portion de paroi latérale d'un canal comporte une « surépaisseur » quand elle est plus épaisse que le reste de la paroi latérale de ce canal. Le canal est alors qualifié de « canal renforcé». Comme illustré sur la figure 4, pour mesurer une épaisseur d'une paroi d'un canal, on se place au droit de cette paroi, ce qui exclut toute mesure d'épaisseur dans les coins du volume intérieur de ce canal

On appelle « cloison de renfort » un ensemble de portions de paroi présentant une surépaisseur, ledit ensemble formant une surface continue, plane ou non.

Les figures 1 et 2 ayant été décrites en préambule, on se reporte à la figure 3, également partiellement décrite ci-dessus.

Le bloc filtrant 11 représenté sur la figure 3 comporte une cloison de renfort 30 qui forme les quatre faces 16a-d de la surface extérieure 16 du bloc filtrant 11.

La figure 4 représente en détail trois canaux périphériques adjacents 14p', 14p et 14p", délimités par des parois latérales 22', 22 et 22", respectivement. Les parois latérales 22', 22 et 22" présentent chacune une portion extérieure 34', 34 et 34", respectivement, en contact avec l'extérieur du bloc 11. et une portion intérieure 36', 36 et 36", respectivement, séparant des volumes intérieurs 38', 38 et 38", respectivement, des canaux adjacents.

Les portions extérieures 34', 34 et 34" ont une épaisseur constante, notée « E », quel que soit le plan de coupe transversale P.

La portion intérieure comporte deux ou trois parties intérieures sensiblement planes, selon que le canal considéré s'étend ou pas le long d'une arête longitudinale du bloc 11.

Ainsi, la portion intérieure 36 de la paroi latérale 22 du canal 14p représenté comporte-t-elle trois parties 36₁, 36₂ et 36₃, tandis que la portion intérieure 36" de la paroi latérale 22" du canal d'angle 14p", définissant l'arête longitudinale 11', comporte deux parties 36" et 36₃, la partie 36₃ étant commune aux parois latérales 22 et 22".

Les parties intérieures ont la même épaisseur constante, notée « e », quel que soit re plan de coupe transversale P.

Tous les canaux périphériques ont une paroi latérale formée sur le modèle décrit ci-dessus, avec une portion intérieure d'épaisseur constante « e », et une portion extérieure d'épaisseur constante « E ».

La cloison de renfort 30 est formée par l'ensemble des portions extérieures des parois latérales des canaux périphériques. Son épaisseur est constante et égale à « E ». La cloison de renfort 30 s'étend sur toute la longueur « L » du bloc 11, depuis la face amont 12 jusqu'à la face aval 13, formant la surface extérieure 16 du bloc 11.

Le rapport R entre de l'épaisseurs « E » sur l'épaisseur « e » est compris entre 1,1 et 3, de préférence, entre 1,9 et 2,1, et de préférence encore, comme représenté, est sensiblement égale à 2.

La cloison de renfort a ainsi la forme d'un manchon à quatre faces 16a, 16b, 16c et 16d d'épaisseur constante E, ouvert sur les faces amont et aval du bloc 11.

De préférence, la surépaisseur de la cloison de renfort est disposée de manière que, dans un plan de coupe transversale P quelconque, les sections de passage des canaux renforcés d'entrée et de sortie soient sensiblement identiques à celles des autres canaux d'entrée et de sortie, respectivement. Avantageusement, l'application d'une surépaisseur ne modifie donc pas les volumes des canaux renforcés et donc l'efficacité globale du bloc filtrant.

De préférence, les cloisons de renfort s'étendent longitudinalement et sont fabriquées lors de l'extrusion du bloc 11 au moyen d'une filière adaptée, selon des techniques connues de l'homme du métier.

L'assemblage de blocs selon l'invention aboutit à une structure présentant un réseau interne de cloisons de renfort améliorant sa résistance à la fissuration.

Après usinage éventuel de cette structure de manière à former un corps filtrant, une surépaisseur de matière peut être ajoutée en périphérie du corps filtrant. Le risque de fissures en est encore diminué.

Dans un mode de réalisation de l'invention, tous les blocs assemblés présentent une surépaisseur, de préférence constante, sur toute leur surface extérieure 16. Après assemblage, les surépaisseurs périphériques des blocs forment ainsi, en coupe transversale, un quadrillage renforçant considérablement la résistance à la fissuration par rapport à un corps filtrant qui ne présenterait qu'une surépaisseur à sa périphérie.

De préférence encore, quel que soit le mode de réalisation, l'épaisseur des portions intérieures des parois latérales des canaux périphériques est identique à l'épaisseur des parois des canaux intérieurs (c'est-à-dire qui ne sont pas des canaux périphériques) du bloc filtrant. L'efficacité de la filtration à travers toutes les parois internes du bloc filtrant, c'est-à-dire des parois qui ne sont pas en contact avec l'extérieur du bloc, est ainsi sensiblement la même, quelle que soit la paroi interne considérée.

La fabrication du corps filtrant en est également simplifiée, les blocs filtrants pouvant être assemblés indifféremment à une position quelconque au sein du corps filtrant.

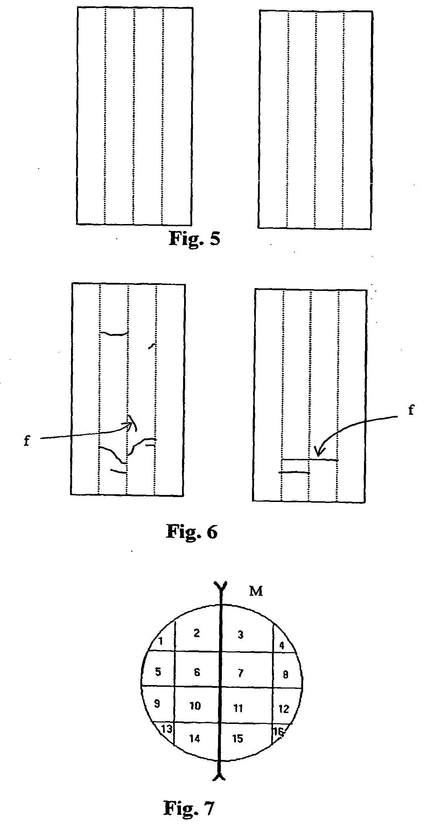

Des tests ont été effectués pour évaluer la résistance à la fissuration d'un corps filtrant composé de 16 blocs filtrants classiques (figure 6) et d'un corps filtrant composé de 16 blocs du même type mais comportant, comme le bloc représenté sur la figure 3, une cloison périphérique de renfort selon l'invention (figure 5). Ces deux corps filtrants ont été soumis à une régénération sévère (correspondant à un régime moteur de 120 km/heure, puis passage au ralenti suivi d'une post-injection) à 5 g/l sur banc moteur. Les blocs filtrants ont ensuite été coupés longitudinalement selon un plan médian. On observe ainsi les coupes longitudinales de quatre blocs filtrants. Une comparaison des coupes longitudinales représentées sur les figures 5 et 6 montre clairement que les blocs selon l'invention ne présentent pas de fissures, à la différence des blocs selon la technique antérieur qui présentent des fissures « f » d'une longueur généralement supérieure à 0,5 mm et pouvant s'étendre sur toute la longueur L du bloc. Des fissures sont visibles à l'oeil nu et au microscope.

Comme cela apparaît clairement à présent, le bloc filtrant à structure renforcée selon l'invention présente une meilleure résistance à la fissuration que les blocs selon la technique antérieure.

Bien entendu, la présente invention n'est pas limitée au mode de réalisation décrit et représenté ci-dessus, fourni à titre illustratif et non limitatif.

L'épaisseur E n'est pas nécessairement constante le long d'une section transversale d'une portion de paroi présentant une surépaisseur. En particulier, ladite portion de paroi peut présenter une face plane et une face bombée ou ondulée. Si le bloc 11 comporte une cloison de renfort formant sa surface extérieure 16, la face plane des portions de paroi formant cette cloison est de préférence une face extérieure, de manière que la surface extérieure 16 du bloc soit formée de pans plans, tandis que la face intérieure de la cloison de renfort présente, en section transversale, des ondulations.

L'épaisseur E n'est pas non plus nécessairement constante entre les différents canaux renforcés formant une cloison de renfort. Par exemple, l'épaisseur E peut être plus grande pour les canaux de sortie que pour les canaux d'entrée.

Ainsi, la cloison de renfort peut-elle être interrompue localement par des « poches » sans surépaisseur, ne pas s'étendre sur toute la longueur L du bloc, ou ne s'étendre que sur une partie des canaux périphériques du bloc.

Dans ce dernier cas, de préférence, la cloison de renfort recouvre cependant au moins une arête longitudinale du bloc filtrant, de préférence toutes les arêtes longitudinales. De préférence, la cloison de renfort s'étend sur toute la longueur L du broc.

La forme, les dimensions et le nombre des cloisons de renfort ne sont pas limitatifs.

De préférence, le bloc 11 ne comporte qu'une unique cloison de renfort, continue, formant sa surface extérieure 16. La surface extérieure 16 d'un bloc n'est en effet pas ou peu utilisée pour la filtration des gaz, les joints 27 en contact avec cette surface extérieure 16 formant une barrière sensiblement étanche aux gaz. Disposer la cloison de renfort en périphérie du bloc évite ainsi de diminuer la surface filtrante globale du bloc, et donc le rendement de filtration du bloc. De préférence, l'épaisseur moyenne E* de la cloison de renfort est supérieure à l'épaisseur moyenne des parois ou des portions de paroi des canaux du bloc autres que les portions de paroi formant la cloison de renfort.

Cependant, une ou plusieurs cloisons de renfort pourraient également être insérées au sein du bloc, de préférence en traversant de part en part le bloc, de préférence encore en s'étendant sensiblement parallèlement aux faces latérales 16a-18d du bloc.

L'épaisseur d'une cloison de renfort pourrait aussi évoluer, périodiquement ou non, dans un plan longitudinal ou transversal. Avantageusement, il est ainsi possible d'adapter l'épaisseur de la cloison de renfort à l'intensité des contraintes thermo-mécaniques locales.

Dans un plan de coupe transversale, il est préférable que la surépaisseur varie régulièrement, de préférence de manière sensiblement sinusoïdale, de manière à augmenter le volume des canaux d'entrée par rapport au volume des canaux de sortie.

Il est également possible de ménager une surépaisseur à la surface du bloc 11 en y fixant de la matière supplémentaire par collage, soudage ou tout autre technique connue. La matière rapportée peut être identique ou différente de la matière constituant le bloc 11. Une surépaisseur de matière est de préférence appliquée, après extrusion, sur les faces des blocs ayant été usinées, par exemple sur les faces externes arrondies des blocs 11a-11b.

Le bloc filtrant 11 pourrait avoir une forme quelconque. La section transversale des canaux 14 n'est pas limitée à la forme carrée. La section des canaux d'entrée pourrait également être différente de celle des canaux de sortie. La section transversale d'un canal pourrait aussi évoluer, périodiquement ou non, le long de ce canal.

## Revendications

1. Bloc destiné notamment à la filtration de particules contenues dans les gaz d'échappement d'un moteur à combustion interne, ledit bloc (11) comportant une pluralité de canaux de circulation desdits gaz (14e,14s), chacun desdits canaux (14e,14s) étant délimité par une paroi latérale (22), un bouchon d'obturation (15e,15s) et une ouverture (19e,19s) débouchant vers l'extérieur, **caractérisé en ce qu'**une première portion (34) de la paroi latérale (22) d'au moins un desdits canaux (14p,14p"), dit « canal renforcé », comporte une surépaisseur par rapport au reste de ladite paroi latérale (22) formant une deuxième portion (36) de ladite paroi latérale (22), le rapport (R) de l'épaisseur (e) de ladite première portion (34) sur l'épaisseur de ladite deuxième portion (36), dans un plan de coupe transversal (P), étant compris entre 1,1 et 3.

2. Bloc selon la revendication 1, **caractérisé en ce qu'**il comporte un groupe de dits canaux renforcés adjacents (14p',14p,14") disposés de manière que lesdites premières portions desdits canaux renforcés forment une cloison de renfort (30) continue.

3. Bloc selon la revendication 2, **caractérisé en ce que** lesdits canaux renforcés dudit groupe (14p',14p,14p'') s'étendent en périphérie dudit bloc.

4. Bloc selon l'une quelconque des revendications précédentes, **caractérisé en ce que** ladite première portion (34) comporte une face extérieure en contact avec l'extérieur dudit bloc (11).

5. Bloc selon l'une quelconque des revendications 2 à 4, **caractérisé en ce que** lesdits canaux renforcés dudit groupe (14p',14p,14p") sont disposés de manière que ladite cloison de renfort (30) recouvre une arête longitudinale (11') dudit bloc filtrant.

6. Bloc selon l'une quelconque des revendications 2 à 5, **caractérisé en ce que** ledit groupe de canaux renforcés (14p',14p,14p") comporte l'ensemble des canaux périphériques dudit bloc (11) de manière que ladite cloison de renfort (30) ceinture ledit bloc, de préférence de manière que ladite cloison de renfort (30) soit à la surface extérieure (16) dudit bloc (11).

7. Bloc selon l'une quelconque des revendications précédentes, **caractérisé en ce que** ledit rapport (R) est constant quel que soit ledit plan de coupe transversal (P) considéré.

8. Bloc selon l'une quelconque des revendications précédentes, **caractérisé en ce que** ladite surépaisseur est sensiblement constante dans un plan de coupe longitudinal quelconque dudit bloc.

9. Bloc selon l'une quelconque des revendications 2 à 8, **caractérisé en ce que** ladite surépaisseur est sensiblement constante pour l'ensemble des canaux renforcés dudit groupe, dans un plan de coupe transversal quelconque et/ou dans un plan longitudinal quelconque.

10. Bloc filtrant selon l'une quelconque des revendications précédentes, **caractérisé en ce que** ledit rapport R est compris entre 1,9 et 2,1, de préférence est sensiblement égal à 2.

11. Corps filtrant destiné à un filtre à particules, **caractérisé en ce qu'**il comporte au moins un bloc filtrant conforme à l'une quelconque des revendications précédentes.

12. Filière d'extrusion conformée de manière à former, par extrusion d'une matière céramique, une structure pourvue de canaux convenant à la fabrication d'un bloc filtrant conforme à l'une quelconque des revendications précédentes, ladite structure comportant ladite surépaisseur.

13. Procédé de fabrication d'un bloc selon l'une quelconque des revendications 1 à 10, comprenant les étapes successives suivantes :
a) extrusion d'une matière céramique de manière à former une structure poreuse en nid d'abeille,
b) application d'une surépaisseur d'une matière, identique ou différente de ladite matière céramique, sur au moins une partie de la surface extérieure de ladite structure poreuse, et
c) séchage et frittage de ladite structure poreuse pour obtenir un bloc filtrant.

14. Procédé selon la revendication 13, **caractérisé en ce qu'**il comporte en outre une étape de séchage de ladite structure poreuse entre les étapes a) et b).

15. Procédé selon la revendication 14, **caractérisé en ce qu'**il comporte en outre une étape d'usinage de ladite structure poreuse séchée obtenue avant l'étape b).

16. Procédé selon la revendication 15, **caractérisé en ce que**, à l'étape b), ladite surépaisseur de matière est appliquée au moins sur une partie de ladite surface extérieure ayant été usinée.

17. Procédé de fabrication d'un corps filtrant (3) par assemblage d'une pluralité de blocs filtrants (11a-11b), **caractérisé en ce qu'**au moins un desdits blocs filtrant est fabriqué selon un procédé selon l'une quelconque des revendications 13 à 16.

## Claims

1. Block intended in particular to filter particles contained in the exhaust gases of an internal combustion engine, said block (11) comprising a plurality of circulation channels (14e, 14s) of said gases, each of said channels (14e, 14s) being delimited by a side wall (22), a sealing plug (15e, 15s) and an orifice (19e, 19s) opening towards the outside, **characterised in that** a first portion (34) of the side wall (22) of at least one of said channels (14p, 14p"), called a "reinforced channel", comprises an over-thickness in relation to the remainder of said side wall (22) forming a second portion (36) of said side wall (22), the ratio (R) of the thickness (e) of said first portion (34) over the thickness of said second portion (36) in a cross-section plane (P) being between 1.1 and 3.

2. Block according to claim 1, **characterised in that** it comprises a group of said adjacent reinforced channels (14p', 14p, 14p") arranged such that said first portions of said reinforced channels form a continuous reinforcing partition (30).

3. Block according to claim 2, **characterised in that** said reinforced channels of said group (14p', 14p, 14p") extend in periphery of said block.

4. Block according to any of the preceding claims, **characterised in that** said first portion (34) comprises an outer face in contact with the exterior of said block (11).

5. Block according to any of claims 2 to 4, **characterised in that** said reinforced channels of said group (14p', 14p, 14p") are arranged so that said reinforcing partition (30) covers a longitudinal ridge (11') of said filter block.

6. Block according to any of claims 2 to 5, **characterised in that** said group of reinforced channels (14p', 14p, 14p") comprises all peripheral channels of said block (11) such that said reinforcing partition (30) surrounds said block, preferably such that said reinforcing channel (30) is on the outer surface (16) of said block (11).

7. Block according to any of the preceding claims, **characterised in that** said ratio (R) is constant whatever said cross-section plane (P) considered.

8. Block according to any of the preceding claims, **characterised in that** said over-thickness is approximately constant in any longitudinal section plane of said block.

9. Block according to any of claims 2 to 8, **characterised in that** said over-thickness is approximately constant for all reinforced channels of said group, in any cross-section plane and/or any longitudinal plane.

10. Filter block according to any of the preceding claims, **characterised in that** said ratio (R) is between 1.9 and 2.1, preferably approximately equal to 2.

11. Filter body intended for a particle filter, **characterised in that** it comprises at least one filter block in accordance with any of the preceding claims.

12. Extrusion die shaped to form, by extrusion from a ceramic material, a structure with channels suitable for the production of a filter block in accordance with any of the preceding claims, said structure comprising said over-thickness.

13. Production process for a block according to any of claims 1 to 10, comprising the following successive stages:
a) extrusion of a ceramic material to form a porous honeycomb structure,
b) application of an overthickness of a material, identical to or different from said ceramic material, over at least part of the outer surface of said porous structure, and
c) drying and sintering of said porous structure to obtain a filter block.

14. Process according to claim 13, **characterised in that** it also comprises a stage of drying said porous structure between stages a) and b).

15. Process according to claim 14, **characterised in that** it also comprises a stage of machining said dried porous structure obtained before stage b).

16. Process according to claim 15, **characterised in that** at stage b), said overthickness of material is applied at least over part of said outer surface that has been machined.

17. Production process for a filter body (3) by assembly of a plurality of filter blocks (11a - 11b), **characterised in that** at least one of said filter blocks is produced in a method according to any of claims 13 to 16.

## Patentansprüche

1. Block, der insbesondere zum Filtern von in Abgasen eines Verbrennungsmotors enthaltenen Partikeln bestimmt ist, wobei der genannte Block (11) mehrere Zirkulationskanäle (14e, 14s) für die Gase aufweist und jeder dieser Kanäle (14e, 14s) durch eine Seitenwand (22), einen Verschlußstopfen (15e, 15s) und eine sich nach außen öffnende Öffnung (19e, 19s) begrenzt ist, **dadurch gekennzeichnet, daß** ein erster Teil (34) der Seitenwand (22) wenigstens eines der genannten Kanäle (14p, 14p"), der als "verstärkter Kanal" gezeichnet wird, gegenüber dem Rest dieser Seitenwand, der einen zweiten Teil (36) dieser Seitenwand (22) bildet, eine Überdicke aufweist, wobei das Verhältnis (R) der Dicke (e) des genannten ersten Teils (34) zu der Dicke des genannten zweiten Teils (36) in einer quer verlaufenden Schnittebene (P) zwischen 1,1 und 3 beträgt.

2. Block nach Anspruch 1, **dadurch gekennzeichnet, daß** er eine Gruppe von benachbarten verstärkten Kanälen (14p', 14p, 14") aufweist, die so angeordnet sind, daß die ersten Teile dieser verstärkten Kanäle eine durchgehende verstärkende Scheidewand (30) bilden.

3. Block nach Anspruch 2, **dadurch gekennzeichnet, daß** die genannten verstärkten Kanäle der genannten Gruppe (14p', 14p, 14p") am Umfang des genannten Blockes verlaufen.

4. Block nach einem der vorstehenden Ansprüche, **dadurch gekennzeichnet, daß** der erste Teil (34) eine Außenfläche aufweist, die mit dem äußeren des genannten Blockes (11) in Kontakt steht.

5. Block nach einem der Ansprüche 2 bis 4, **dadurch gekennzeichnet, daß** die genannten verstärkten Kanäle der genannten Gruppe (14p', 14p, 14p") so angeordnet sind, daß die genannte verstärkende Scheidewand (30) eine längsverlaufende Kante (11') des genannten Filterblockes bedeckt.

6. Block nach einem der Ansprüche 2 bis 5, **dadurch gekennzeichnet, daß** die genannte Gruppe der verstärkten Kanäle (14p', 14p, 14p") die Gesamtheit der am Umfang des genannten Blockes verlaufenden Kanäle umfaßt, so daß die genannte verstärkende Scheidewand (30) den genannten Block umgürtet, vorzugsweise so, daß die genannte verstärkende Scheidewand (30) die Außenfläche (16) des genannten Blockes (11) ist.

7. Block nach einem der vorstehenden Ansprüche, **dadurch gekennzeichnet, daß** das genannte Verhältnis (R) für alle betrachteten Schnittebenen (P) konstant ist.

8. Block nach einem der vorstehenden Ansprüche, **dadurch gekennzeichnet, daß** die genannte Überdicke in einer längsverlaufenden Schnittebene des genannten Blockes im wesentlichen konstant ist.

9. Block nach einem der Ansprüche 2 bis 8, **dadurch gekennzeichnet, daß** die genannte Überdicke für die Gesamtheit der verstärkten Kanäle der genannten Gruppe im wesentlichen konstant ist, und zwar in einer beliebigen querverlaufenden Schnittebene und/oder irgendeiner längsverlaufenden Schnittebene.

10. Block nach einem der vorstehenden Ansprüche, **dadurch gekennzeichnet, daß** das genannte Verhältnis R zwischen 1,9 und 2,1 beträgt und vorzugsweise etwa gleich 2 ist.

11. Filterkörper für einen Partikelfilter, **dadurch gekennzeichnet, daß** er wenigstens einen Filterblock aufweist, der gemäß einem der vorstehenden Ansprüche ausgebildet ist.

12. Extrusionsform, die dazu ausgebildet ist, durch Extrusion eines keramischen Materials eine mit Kanälen versehene Struktur herzustellen, die sich für die Herstellung eines Filterblockes nach einem der vorstehenden Ansprüche eignet, wobei die genannte Struktur die genannte Überdicke aufweist.

13. Verfahren zur Herstellung eines Blockes nach einem der Ansprüche 1 bis 10, mit den folgenden aufeinanderfolgenden Schritten:
a) Extrusion eines keramischen Materials zur Bildung einer porösen Wabenstruktur,
b) Ausbilden einer Überdicke aus einem Material, das mit dem genannten keramischen Material identisch oder davon verschieden ist, auf wenigstens einem Teil der äußeren Oberfläche der genannten porösen Struktur, und
c) Trocknen und Sintern der genannten porösen Struktur, um einen Filterblock zu erhalten.

14. Verfahren nach Anspruch 13, **dadurch gekennzeichnet, daß** es außerdem einen Schnitt der Trocknung der genannten porösen Struktur zwischen den Schritten a) und b) aufweist.

15. Verfahren nach Anspruch 14, **dadurch gekennzeichnet, daß** es außerdem einen Schritt der Bearbeitung der genannten getrockneten porösen Struktur aufweist, die vor dem Schritt b) erhalten wird.

16. Verfahren nach Anspruch 15, **dadurch gekennzeichnet, daß** in dem Schritt b) die genannte Überdicke des Materials wenigstens auf einem Teil der genannten äußeren Oberfläche ausgebildet wird, die bearbeitet wurde.

17. Verfahren zur Herstellung eines Filterkörpers (3) durch Zusammenbau mehrerer Filterblöcke (11a-11b), **dadurch gekennzeichnet, daß** wenigstens einer der genannten Filterblöcke nach einem Verfahren gemäß einem der Ansprüche 13 bis 16 hergestellt wird.
